# EUROPEAN PATENT SPECIFICATION

(11) **EP 4 204 750 B1**
(45) Date of publication and mention of the grant of the patent: **09.07.2025**
(21) Application number: 21791493.6
(22) Date of filing: 31.08.2021
(51) Int. Cl.: F26B 3/14, B01D 1/16, F26B 21/04, F26B 21/08, F26B 25/00, F26B 25/16

(54) **ELECTROSTATIC SPRAY DRYER APPARATUS AND METHOD**
ELEKTROSTATISCHER SPRÜHTROCKNER UND -VERFAHREN
APPAREIL ET MÉTHODE DE SÉCHAGE PAR PULVÉRISATION ÉLECTROSTATIQUE

(30) Priority: 31.08.2020 US 202063072582 P
(43) Date of publication of application: 05.07.2023
(73) Proprietor: Spraying Systems Co., Wheaton, IL 60187-7901 (US)
(72) Inventor: SZCZAP, Joseph, Naperville, IL 60565 (US); BARNES, Christopher, Montgomery, IL 60538 (US)
(74) Representative: Barker Brettell LLP
(86) International application number: PCT/US2021/048349
(87) International publication number: WO 2022/047356

(56) References cited:
- WO-A2-2005/112882
- CN-A- 101 555 471
- CN-U- 204 134 241
- CN-U- 204 411 746
- US-B1- 6 223 455
- US-B1- 9 993 787
- US-B2- 10 286 411

## Description

### FIELD OF THE INVENTION

The present invention relates generally to electrostatic spray dryers, and more particularly to an apparatus and method for spray drying liquids into dry powder form.

### BACKGROUND OF THE INVENTION

Spray drying is a well-known and extensively used process in which liquid slurries are sprayed into a drying chamber into which heated air is introduced for drying the liquid into powder. The slurry commonly includes a liquid, such as water, an ingredient, such as a food, flavor, or pharmaceutical, and a carrier. During the drying process, the liquid is driven off leaving the ingredient in powder form encapsulated within the carrier. Spray drying also is used in producing powders that do not require encapsulation, such as various food products, additives, and chemicals.

Electrostatic spray drying allows for processing at temperatures below what is commonly achievable with conventional spray drying techniques, which makes the technology well-suited for processing of heat-sensitive pharmaceutical, biological, and nutraceutical compounds into dried powders. However, the potency or viability of extremely heat-sensitive compounds can be degraded after exposure at temperatures exceeding 35°C-75°C for more than a few seconds. Despite the lower operating temperature capability provided by the electrostatic drying process, powders can be exposed to damaging temperatures exceeding these limits for several minutes before the dried powder is finally collected and cooled outside of the process. This can particularly occur in the downstream filter apparatus which separates the dried powder from the drying gas, where dried particles can build up or remain in the filter system for prolonged times.

CN 204 134 241 U describes an instantaneous spray drying tower comprising a tower body, wherein an atomizer is connected to the top of the tower body, a heat exchanger is connected to the upper part of the tower body, and a material receiving room is connected to a tapered accommodating part of the tower body. A condensing device is arranged on the outer surface of the tapered accommodating part of the tower body, and the condensing device is composed of a condensing pipe and a cooling medium circulator connected with the condensing pipe.

### OBJECTS AND SUMMARY OF THE INVENTION

The invention is an electrostatic spray drying system according to claim 1.

It is an object of the present invention to provide an electrostatic spray drying apparatus and method for more effectively and efficiently spray drying heat sensitive powders.

Another object is to provide an electrostatic spray drying apparatus and method as characterized above that can be operated at substantially higher production rates than conventional spray drying systems.

A further object is to provide such an apparatus and method of the above kind that can be operated at higher temperatures for quicker and more efficient spray drying, even when producing heat sensitive powders.

Still another object is to provide an electrostatic spray drying apparatus and method of the foregoing type in which the dried powder is separated from the drying gas in a separation plenum without exposure to high temperature drying gases.

Yet another object is to provide such an electrostatic spray drying apparatus that is relatively simple in design and lends itself to economical manufacture.

Other objects and advantages of the invention will become apparent upon reading the following detailed description and upon reference to the drawings.

### BRIEF DESCRIPTION OF THE DRAWINGS

Figure 1 is a front elevational view of an illustrative spray drying system in accordance with the invention;
Fig. 2 is a diagrammatic depiction of the spray drying system shown in Fig. 1;
Fig. 3 is an enlarged vertical section of the water jacketed cone shaped powder direction plenum of the illustrated spray drying system;
Fig. 4 is an enlarged front elevational view of the water jacketed connecting pipe for coupling between the powder direction plenum and the powder separation plenum of the illustrated embodiment;
Fig. 5 is an enlarged vertical section of the electrostatic spray nozzle assembly of the illustrated spray drying system; and
Fig. 6 is an enlarged partial vertical section of the powder separation plenum of the illustrated spray dryer system.

### DETAILED DESCRIPTION OF THE PREFERRED EMBODIMENT

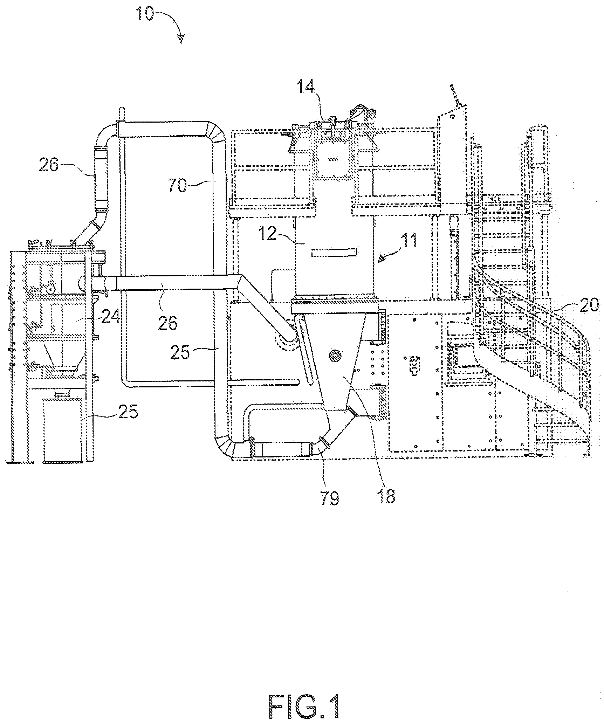

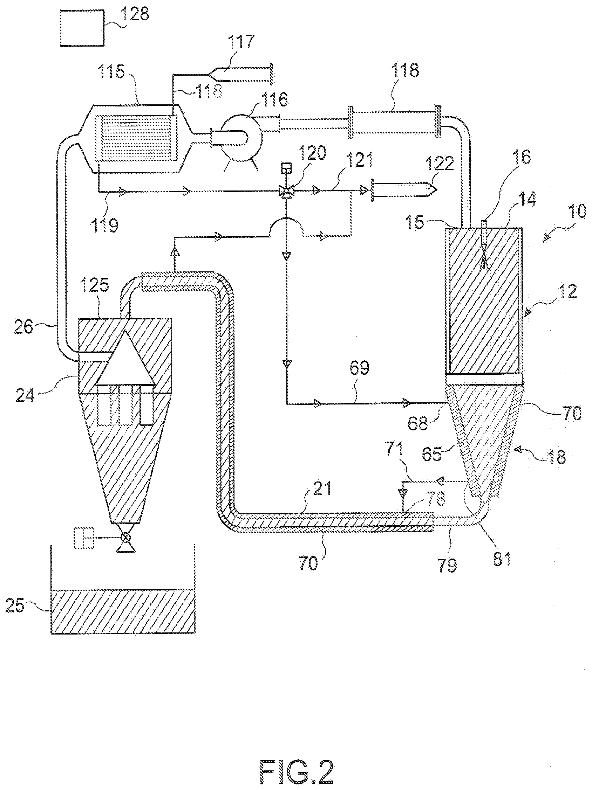

Referring now more particularly to the Figs. 1 and 2 drawings, there is shown an illustrative electrostatic spray drying system 10 in accordance with the invention which includes a processing tower 11 comprising a drying chamber 12 in the form of an upstanding cylindrical body; a top closure arrangement in the form of a cover or lid 14 for the drying chamber 12 having a heating gas inlet 15 (Fig. 2) and an electrostatic liquid spray nozzle assembly 16; and a bottom closure arrangement coupling a powder direction plenum 18 in the form of a cone supported to the bottom of the drying chamber 12. A frame supports the processing tower 11 in upright condition, which in this case includes stairs 20 for the operating personnel. A conduit 21 in the form of a tube communicates a drying gas and powder mixture from the powder direction plenum 18 to a powder separation plenum 24 supported in upright position by the frame adjacent the processing tower 11 for filtering powder from the drying gas and directing the dried powder into a powder collection container or drum 25 and directing the filtered drying gas to return line 26.

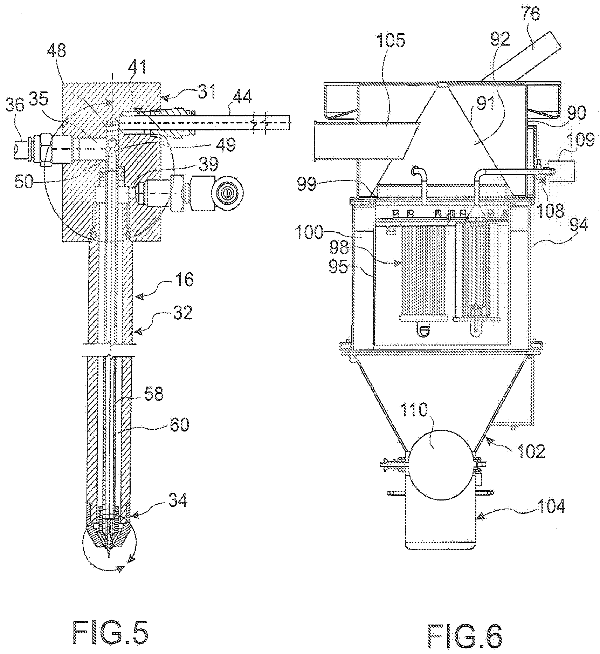

The drying chamber 12 and electrostatic spray nozzle assembly 16 may be of the type disclosed in US patent 10,286,411 assigned to the same assignee as the present application. The spray nozzle assembly 16, as depicted in Fig. 5, utilizes a pressurized air for directing a spray of electrostatically charged particles into the drying chamber 12 for quick and efficient drying of liquid slurries into desired powder form. The illustrated spray nozzle assembly 16 includes a nozzle supporting head 31, an elongated nozzle barrel or body 32 extending downstream from the head 31, and a discharge spray tip assembly 34 at a downstream end of the elongated nozzle body 32. The head 31 in this case is made of plastic or other non-conductive material and is formed with a radial liquid inlet passage 35 that communicates with a liquid supply line of 36 and in turn a supply of liquid to be dried.

The nozzle supporting head 31 in this case further is formed with a radial pressurized atomizing air inlet passage 39 downstream of said liquid inlet passage 35 that communicates with a suitable pressurized air supply. A radial passage 41 upstream of the liquid inlet passage 35 receives a high voltage cable 44 in abutting electrically contacting relation to an electrode 48 axially supported within the head 31 and extending downstream of the liquid inlet passage 35.

For enabling liquid passage to the spray tip assembly 34, the electrode 48 is formed with radial and axial passages 49, 50 communicating with a liquid feed tube 58, made of stainless steel or other electrically conductive metal, for communicating liquid from the axial electrode liquid passage 50 to the downstream discharge spray tip assembly 34. An annular atomizing air passage 60 is defined between the liquid feed tube 58 and the outer cylindrical body 32 of the spray nozzle assembly 16 for directing atomizing gas from the atomizing air inlet 39 to the spray tip assembly 34 for atomizing the discharging liquid spray from the spray tip assembly 34. The cylindrical body of the drying chamber 12 preferably is made of a non-electrically conductive material and includes a removable and replaceable internal liner for facilitating changeover between different liquids to be sprayed, again as disclosed in applicant's above referenced patent.

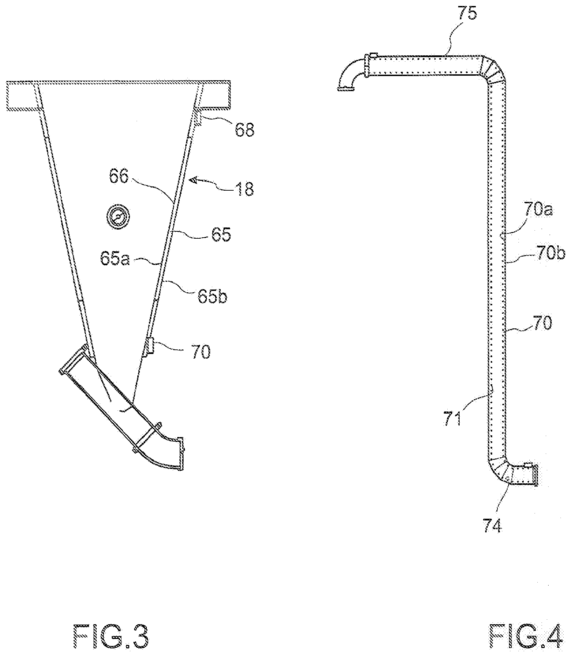

In carrying out an important aspect of the present embodiment, the powder direction plenum 18 and the connecting conduit 21 between the powder direction plenum 18 and powder separation plenum 24 both comprise water jacket constructed heat exchangers for cooling the gas and entrained powder mixture immediately upon discharge from the drying chamber 12 for limiting exposure of the powder to damaging temperatures. The conical powder direction plenum 18, which tapers inwardly in a downstream direction, is secured to the underside of the drying chamber 12 for directly receiving dried powder and heating gas from the drying chamber 12. The inwardly tapered conical wall of the powder direction plenum 18 comprises a water jacket constructed heat exchanger 65 defined by inner and outer conical walls 65a, 65b which define a conical cooling water flow passage 66 (Figs. 2 and 3). The conical heat exchanger 65 in this case includes a cooling water inlet 68 adjacent an upper end thereof connected to a hose 69 coupled to a chilled water supply as will become apparent, and a cooling water return outlet 70 adjacent a lower end of the heat exchanger 65 coupled to an outlet hose 71. Chilled cooling water, preferably controlled at a temperature of between about 4.5°C and 12.8°C (i.e. 40°-55°F) directed into the cooling water inlet 68 continuously flows through the flow passage 66 of conical heat exchanger 65 such that powder and drying gas directed into the powder direction plenum 18 and contact with the heat exchanger 65 are immediately subjected to cooling upon discharge from the drying chamber 12.

In carrying out this embodiment, the connecting conduit 21 between the powder direction plenum 18 and the powder separation plenum 24 also comprises a water jacket constructed heat exchanger 70 having inner and outer walls 70a, 70b that define an annular cooling water flow passage 71, with the inner wall 70a being sized such that the gas will efficiently convey all entrained powder from the powder direction plenum 18 to the powder separation plenum 24. The heat exchanger 70 in this case has an angled upstream end 74 coupled to an underside of the powder direction plenum 18 and an upper angled end 75 connected to and communicating with an inlet 76 in an upper end of the powder separation plenum 24 for directing pre-cooled powder and drying gas into the plenum in a downward and tangential direction.

The connecting conduit heat exchanger 70 has a chilled water inlet 78 coupled to a chilled water supply line 79 communicating from an outlet 81 adjacent a lower end of the powder collection plenum 18 for receiving chilled water directly from powder direction plenum heat exchanger 65. Hence, it will be seen that heating gas and powder discharging from the drying chamber 12 will come into substantial contact with the heat exchanging surfaces of the conical powder direction plenum heat exchanger 65 and the connecting conduit heat exchanger 70 for cooling before it is directed into the separation plenum 24. In practice, the heating gas and powder mixture discharging from the drying chamber at temperatures of 60°C-90°C can be cooled to temperatures of between about 25°C and 50°C (i.e. close to ambient temperature) prior to direction into the powder separation plenum 24. Such intermediate and substantial cooling has been found to prevent damage to even highly temperature sensitive powders.

The illustrated powder separation plenum 24, as depicted in Fig. 6, may be of a type depicted in applicant's above referenced patent, basically comprising an upper cylindrical plenum 90 having said powder receiving inlet 76; a downwardly opening conically configured exhaust plenum 91 disposed within said upper cylindrical plenum 90 that defines on its underside an exhaust chamber 92; a lower cylindrical plenum 94; a cylindrical filter element shroud 95 concentrically supported within the lower cylindrical plenum 94 within which a plurality of circumferentially spaced filters 98 (only one of which is shown in Fig. 6) are supported in depending relation to a respective opening in a support plate 99.

During operation of the spray drying system 10, it will be seen that drying gas and powder directed into the powder direction plenum 24 will be channeled about the conical exhaust plenum 91 into the annular passageways 100 about the inner cylindrical filter element shroud 95 downwardly into a powder direction cone 102 for collection in a collecting chamber 104. While most of the dried powder remaining in the gas flow will migrate into the powder collection chamber 104, fine gas air borne particulate matter will be separated and retained by the annular filters 98 as the drying gas passes upwardly through the filters 98 into the drying gas exhaust plenum 91 for exit through a drying gas exhaust port 105 for recirculation to the drying chamber 12, as will be become apparent. For periodic cleaning of the filters 98 of buildup powder, the cylindrical filters 98 each have a respective reverse gas pulse cleaning device 108 cyclically operated by a control valve 109. A butterfly valve 110 in this case is mounted at an upper end of the collection chamber 104 and is operable for controlling the direction of powder into the collection chamber 104.

For recirculating and reusing exiting drying gas from the separation plenum 24, the separation plenum outlet port 105 is coupled to the recirculation line 26 which in turn is connected to the heating gas inlet port 15 of the top cover 14 of the drying chamber 12 through a condenser 115, a blower 116, and a drying gas heater 118 (Fig. 2). The condenser 115 removes any water vapor from the exhaust gas flow stream by means of cold water chilled condensing coils 115a having respective cold water supply 117 communicating with the condenser through inlet line 117a. The dried gas may then directed by the blower 116 through the gas heater 118 which reheats the drying gas after cooling in the condenser 115 to a predetermined heated temperature for the particular powder drying operating for redirection back to the heating gas inlet port 15 and into the drying chamber 12.

In keeping with a further feature of the present embodiment, the chilled water exiting the condenser 115 may be recirculated, in whole or in part, to the water jacket constructed heat exchanger 65 of the powder direction plenum 18. In the illustrated embodiment, the condenser 115 is coupled to a three-way diverting valve 120 enabling chilled water from the condenser 115 to be directed to the inlet 68 of the powder direction plenum heat exchanger 65 or to a return line 121 to the water supply 122 for re-cooling. In further carrying out this feature, the position of the valve 120, and correspondingly the chilled water flow rates, are controlled by a control 128 on a temperature basis from a temperature sensor 125 located in the powder separation plenum. Hence, the temperature of the child water supply to the powder collection cone heat exchanger can be selectively controlled for predetermined cooling of the powder gas mixture exiting the drying chamber.

From the foregoing, it can be seen that the heat exchange features of the powder direction cone and connection tube between the powder direction cone and the separation plenum enable immediate cooling of gas and entrained powder mixture exiting the drying chamber well before it reaches the gas powder separation apparatus, hence limiting the exposure of the dried powder to damaging temperatures. The chilled water can be precisely controlled by upstream temperature sensing. The electrostatic spray drying combined with such immediate gas powder and gas cooling makes the system well suited for processing heat sensitive powders. The immediate product cooling results in increased potency of the finished dried product, allowing use of the system on extremely heat sensitive formulations. Moreover, the production of dried powder can be increased substantially since the inlet temperature of the drying gas can be operated at higher temperatures that improve the evaporation rate in the drying chamber. Since the exposure time in that area is minimal, because the powder reaches the cooling section immediately, the powder can be produced at a substantially faster rate while still being protected.

## Claims

1. An electrostatic spray drying system for drying liquid into powder form comprising:
an elongated structural body (12) supported in upright position;
an upper end closure arrangement (14) and a lower end closure arrangement at opposite upper and lower ends of the elongated body (12), respectively, for forming a drying chamber within said elongated body (12);
an electrostatic spray nozzle (16) supported in said upper closure arrangement (14);
said electrostatic spray nozzle (16) including a nozzle body (32) having a discharge spray tip (34) at a downstream end for directing liquid into said drying chamber;
said electrostatic spray nozzle (16) having a liquid inlet (35) for coupling to a supply of liquid to be discharged into the drying chamber and an electrode (48) for coupling to an electrical source for electrically charging liquid passing through said spray nozzle (16) for discharge from said discharge spray tip (34) into said drying chamber as fine liquid particles;
said upper closure arrangement (14) having a drying gas inlet (15) for directing heated drying gas into said drying chamber for drying the discharged liquid particles into powder;
said lower closure arrangement including a powder direction plenum (18) for receiving drying gas and entrained powder from said drying chamber;
a powder separation plenum (24) downstream of said powder direction plenum (18); a connecting conduit (21) between said powder direction plenum (18) and said powder separation plenum (24) for directing dried powder and gas exiting the powder direction plenum to said powder separation plenum; said powder separation plenum (24) including at least one filter element (98) for separating dried powder from the drying gas and directing separated gas to a gas outlet (105) of the powder separation plenum while directing separated dried powder to a powder collection container (25);
said powder direction plenum (18) including an outer water jacket heat exchanger (65) disposed in surrounding relation to said powder direction plenum (18) for cooling the drying gas and entrained powder during passage through said powder direction plenum upon discharge from said drying chamber (12) for reducing exposure of the powder to damaging temperatures; said powder direction plenum water jacket heat exchanger (65) including a cooling water inlet (68) adjacent one end coupled to a cooling water supply (117) and a cooling water outlet (81) adjacent an opposite end of the powder direction plenum water jacket heat exchanger such that the cooling water from said cooling water supply (117) continuously flows through the powder direction plenum water jacket heat exchanger (65);
a connecting conduit water jacket heat exchanger (70) defining an annular cooling water passage (71) in surrounding relation to said connecting conduit (21); a cooling water inlet (78) adjacent one end of the connecting conduit water jacket heat exchanger annular cooling water passage (71) and a cooling water outlet adjacent an opposite end of said connecting conduit water jacket heat exchanger annular cooling water passage (71) such that cooling water supplied to said connecting conduit water jacket heat exchanger cooling water inlet (78) is continuously directed through said annular cooling water passage (71) of said connecting conduit water jacket heat exchanger (70) for further cooling drying gas and powder exiting the powder direction plenum (18) prior to entering the powder separation plenum (24) and direction to the powder collection container.

2. The electrostatic spray drying system of claim 1 in which said powder direction plenum (18) and surrounding water jacket heat exchanger (65) are conically tapered inwardly in a downstream direction.

3. The electrostatic spray drying system of claim 2 in which said powder direction plenum water jacket heat exchanger (65) comprises inner and outer conical walls (65a, 65b) that define a conical cooling flow passage (66).

4. The electrostatic spray drying system of claim 2 in which said powder direction plenum heat exchanger cooling water inlet (68) is adjacent an upper end of said powder direction plenum heat exchanger (65) and said powder direction plenum heat exchanger cooling water outlet (81) is adjacent a lower end of said powder direction plenum heat exchanger (65).

5. The electrostatic spray drying system of claim 1 in which said cooling water supply (117) to said powder directing plenum heat exchanger (65) is chilled to a temperature of between 4.5°C and 12.8°C.

6. The electrostatic spray drying system of claim 1 in which said cooling water outlet (81) of said powder direction plenum water jacket heat exchanger (65) is coupled to the cooling water inlet (78) of said connecting conduit water jacket heat exchanger (70) for directing cooling water exiting said powder direction plenum water jacket heat exchanger (65) through said connecting conduit water jacket heat exchanger (70).

7. The electrostatic spray drying system of claim 1 in which said connecting conduit (21) communicates between a lower end of said powder direction plenum and an upper end of said powder separation plenum.

8. The electrostatic spray drying system of claim 1 in which said cooling water supply (117) to said powder direction plenum heat exchanger (65) is effective for cooling heated gas and powder discharging from said drying chamber (12) to temperatures of between 60°C and 90°C and for cooling the drying gas and dried powder to temperatures of between 25°C and 50°C prior to direction to said powder separation plenum (24).

9. The electrostatic spray drying system of claim 1 including a gas return line (26) coupled between said powder separation plenum gas outlet (105) and said drying chamber gas inlet (15) for redirecting drying gas into said heating chamber (12), and a heater (118) disposed within said gas return line (26) for reheating gas prior to redirection of the gas into the heating chamber (12).

10. The electrostatic spray drying system of claim 9 in which said gas return line (26) includes a condenser (115) upstream of said heater (118) for removing liquid vapor from said gas prior to direction to said heater.

11. The electrostatic spray drying system of claim 10 in which said condenser (115) has a water outlet line (119) for directing condensed water to the cooling water inlet (68) of said powder direction plenum water jacket heat exchanger (65).

12. The electrostatic spray drying system of claim 11 including a selectively operable valve (120) in said condenser water outlet line (119) for selectively directing condensed water to said cooling water supply (122)_or said cooling water inlet (68) of said powder direction plenum water jacket heat exchanger (65).

13. The electrostatic spray drying system of claim 12 including a temperature sensor (125) in said powder separation plenum for sensing the temperature in said powder separation plenum, and a control for operating said valve (120) in response to temperatures sensed by said temperature sensor (125).

## Patentansprüche

1. Elektrostatisches Sprühtrocknungssystem zum Trocknen von Flüssigkeit zu Pulverform, umfassend:
einen langgestreckten Strukturkörper (12), der in aufrechter Position gelagert ist;
eine Oberes-Ende-Verschlussanordnung (14) und eine Unteres-Ende-Verschlussanordnung an gegenüberliegenden oberen bzw. unteren Enden des langgestreckten Körpers (12), um eine Trockenkammer in dem langgestreckten Körper (12) zu bilden;
eine elektrostatische Sprühdüse (16), die in der oberen Verschlussanordnung (14) gelagert ist;
wobei die elektrostatische Sprühdüse (16) einen Düsenkörper (32) mit einer Ausgabe-Sprühspitze (34) an einem stromabwärtigen Ende aufweist, um Flüssigkeit in die Trockenkammer zu leiten;
wobei die elektrostatische Sprühdüse (16) einen Flüssigkeitseinlass (35) zum Koppeln an eine Zufuhr von Flüssigkeit, die in die Trockenkammer ausgegeben werden soll, und eine Elektrode (48) zum Koppeln an eine Stromquelle zum elektrischen Aufladen von Flüssigkeit, die durch die Sprühdüse (16) zum Ausgeben aus der Ausgabe-Sprühspitze (34) in die Trockenkammer als feine Flüssigkeitspartikel strömt, aufweist;
wobei die obere Verschlussanordnung (14) einen Trockengaseinlass (15) zum Leiten von erhitztem Trockengas in die Trockenkammer zum Trocknen der ausgegebenen Flüssigkeitspartikel zu Pulver aufweist;
wobei die untere Verschlussanordnung eine Pulverleitkammer (18) zum Aufnehmen von Trockengas und mitgeführtem Pulver aus der Trockenkammer aufweist;
eine Pulvertrennkammer (24) stromabwärts der Pulverleitkammer (18); eine Verbindungsleitung (21) zwischen der Pulverleitkammer (18) und der Pulvertrennkammer (24) zum Leiten von getrocknetem Pulver und Gas, die aus der Pulverleitkammer austreten, zu der Pulvertrennkammer; wobei die Pulvertrennkammer (24) wenigstens ein Filterelement (98) zum Trennen von getrocknetem Pulver von dem Trockengas und Leiten von abgetrenntem Gas zu einem Gasauslass (105) der Pulvertrennkammer aufweist, während abgetrenntes getrocknetes Pulver zu einem Pulversammelbehälter (25) geleitet wird;
wobei die Pulverleitkammer (18) einen äußeren Wassermantel-Wärmetauscher (65) aufweist, der in umschließender Beziehung zu der Pulverleitkammer (18) angeordnet ist, um das Trockengas und mitgeführtes Pulver während des Durchtretens durch die Pulverleitkammer nach Austreten aus der Trockenkammer (12) zu kühlen, um die Exposition des Pulvers gegenüber schädigenden Temperaturen zu verringern; wobei der Pulverleitkammer-Wassermantel-Wärmetauscher (65) einen Kühlwassereinlass (68) benachbart zu einem Ende, der an eine Kühlwasserzufuhr (117) gekoppelt ist, und einen Kühlwasserauslass (81) benachbart zu einem entgegengesetzten Ende des Pulverleitkammer-Wassermantel-Wärmetauschers aufweist, so dass das Kühlwasser von der Kühlwasserzufuhr (117) kontinuierlich durch den Pulverleitkammer-Wassermantel-Wärmetauscher (65) fließt;
einen Verbindungsleitung-Wassermantel-Wärmetauscher (70), der einen ringförmigen Kühlwasserdurchgang (71) in umschließender Beziehung zu der Verbindungsleitung (21) definiert; einen Kühlwassereinlass (78) benachbart zu einem Ende des ringförmigen Kühlwasserdurchgangs (71) des Verbindungsleitung-Wassermantel-Wärmetauschers und einen Kühlwasserauslass benachbart zu einem gegenüberliegenden Ende des ringförmigen Kühlwasserdurchgangs (71) des Verbindungsleitung-Wassermantel-Wärmetauschers, so dass dem Kühlwassereinlass (78) des Verbindungsleitung-Wassermantel-Wärmetauschers zugeführtes Kühlwasser kontinuierlich durch den ringförmigen Kühlwasserdurchgang (71) des Verbindungsleitung-Wassermantel-Wärmetauscher (70) geleitet wird, zum weiteren Kühlen von Trockengas und Pulver, die aus der Pulverleitkammer (18) austreten, bevor sie in die Pulvertrennkammer (24) und in Richtung zu dem Pulversammelbehälter eintreten.

2. Elektrostatisches Sprühtrocknungssystem nach Anspruch 1, wobei die Pulverleitkammer (18) und der umgebende Wassermantel-Wärmetauscher (65) in einer stromabwärtigen Richtung konisch nach innen verjüngt sind.

3. Elektrostatisches Sprühtrocknungssystem nach Anspruch 2, wobei der Pulverleitkammer-Wassermantel-Wärmetauscher (65) innere und äußere konische Wände (65a, 65b) umfasst, die einen konischen Kühlströmungsdurchgang (66) definieren.

4. Elektrostatisches Sprühtrocknungssystem nach Anspruch 2, wobei der Pulverleitkammer-Wärmetauscher-Kühlwassereinlass (68) an ein oberes Ende des Pulverleitkammer-Wärmetauschers (65) angrenzt und der Pulverleitkammer-Wärmetauscher-Kühlwasserauslass (81) an ein unteres Ende des Pulverleitkammer-Wärmetauschers (65) angrenzt.

5. Elektrostatisches Sprühtrocknungssystem nach Anspruch 1, wobei die Kühlwasserzufuhr (117) zu dem Pulverleitkammer-Wärmetauscher (65) auf eine Temperatur von zwischen 4,5 °C und 12,8 °C gekühlt wird.

6. Elektrostatisches Sprühtrocknungssystem nach Anspruch 1, wobei der Kühlwasserauslass (81) des Pulverleitkammer-Wassermantel-Wärmetauschers (65) an den Kühlwassereinlass (78) des Verbindungsleitungs-Wassermantel-Wärmetauschers (70) gekoppelt ist, um Kühlwasser, das aus dem Pulverleitkammer-Wassermantel-Wärmetauscher (65) austritt, durch den Verbindungsleitungs-Wassermantel-Wärmetauscher (70) zu leiten.

7. Elektrostatisches Sprühtrocknungssystem nach Anspruch 1, wobei die Verbindungsleitung (21) zwischen einem unteren Ende der Pulverleitkammer und einem oberen Ende der Pulvertrennkammer kommuniziert.

8. Elektrostatisches Sprühtrocknungssystem nach Anspruch 1, wobei die Kühlwasserzufuhr (117) zu dem Pulverleitkammer-Wärmetauscher (65) zum Kühlen von erhitztem Gas und Pulver, die aus der Trockenkammer (12) austreten, auf Temperaturen von zwischen 60 °C und 90 °C und zum Kühlen des Trockengases und des getrockneten Pulvers auf Temperaturen von zwischen 25 °C und 50 °C vor dem Leiten zu der Pulvertrennkammer (24) wirksam ist.

9. Elektrostatisches Sprühtrocknungssystem nach Anspruch 1, das eine Gasrückführleitung (26), die zwischen den Pulvertrennkammer-Gasauslass (105) und den Trockenkammer-Gaseinlass (15) gekoppelt ist, zum Umleiten von Trockengas in die Heizkammer (12) aufweist, und eine Heizvorrichtung (118), die innerhalb der Gasrückführleitung (26) angeordnet ist, um Gas vor dem Umleiten des Gases in die Heizkammer (12) wieder zu erhitzen.

10. Elektrostatisches Sprühtrocknungssystem nach Anspruch 9, wobei die Gasrückführleitung (26) einen Kondensator (115) stromaufwärts der Heizvorrichtung (118) zum Entfernen von flüssigem Dampf aus dem Gas vor dem Leiten zu der Heizvorrichtung aufweist.

11. Elektrostatisches Sprühtrocknungssystem nach Anspruch 10, wobei der Kondensator (115) eine Wasserauslassleitung (119) zum Leiten von kondensiertem Wasser zu dem Kühlwassereinlass (68) des Pulverleitkammer-Wassermantel-Wärmetauschers (65) aufweist.

12. Elektrostatisches Sprühtrocknungssystem nach Anspruch 11, das ein selektiv betätigbares Ventil (120) in der Kondensatorwasserauslassleitung (119) zum selektiven Leiten von kondensiertem Wasser zu der Kühlwasserzufuhr (122) oder dem Kühlwassereinlass (68) des Pulverleitkammer-Wassermantel-Wärmetauschers (65) aufweist.

13. Elektrostatisches Sprühtrocknungssystem nach Anspruch 12, das einen Temperatursensor (125) in der Pulvertrennkammer zum Erfassen der Temperatur in der Pulvertrennkammer und eine Steuerung zum Betätigen des Ventils (120) als Reaktion auf Temperaturen, die von dem Temperatursensor (125) erfasst werden, aufweist.

## Revendications

1. Système de séchage par pulvérisation électrostatique pour sécher un liquide de façon à obtenir une forme pulvérulente comprenant :
un corps structurel allongé (12) supporté en position verticale ;
une structure de fermeture d'extrémité supérieure (14) et une structure de fermeture d'extrémité inférieure respectivement situées à des extrémités supérieure et inférieure opposées du corps allongé (12), pour former une chambre de séchage à l'intérieur dudit corps allongé (12) ;
une buse de pulvérisation électrostatique (16) supportée dans ladite structure de fermeture supérieure (14) ;
ladite buse de pulvérisation électrostatique (16) comprenant un corps de buse (32) comportant un embout d'évacuation par pulvérisation (34) au niveau d'une extrémité aval servant à diriger du liquide dans ladite chambre de séchage ;
ladite buse de pulvérisation électrostatique (16) comportant une entrée de liquide (35) destinée à être accouplée à une alimentation de liquide à évacuer dans la chambre de séchage et une électrode (48) destinée à être accouplée à une source électrique pour charger électriquement le liquide passant à travers ladite buse de pulvérisation (16) destiné à être évacué par ledit embout d'évacuation par pulvérisation (34) dans ladite chambre de séchage sous la forme de fines particules de liquide ;
ladite structure de fermeture supérieure (14) comportant une entrée de gaz de séchage (15) pour diriger un gaz de séchage chauffé dans ladite chambre de séchage afin de sécher les particules de liquide évacuées de façon à obtenir une poudre ;
ladite structure de fermeture inférieure comprenant un plénum de direction de poudre (18) destiné à recevoir le gaz de séchage et la poudre entraînée provenant de ladite chambre de séchage ;
un plénum de séparation de poudre (24) en aval dudit plénum de direction de poudre (18) ; un conduit de raccordement (21) entre ledit plénum de direction de poudre (18) et ledit plénum de séparation de poudre (24) pour diriger la poudre séchée et le gaz sortant du plénum de direction de poudre vers ledit plénum de séparation de poudre ; ledit plénum de séparation de poudre (24) comprenant au moins un élément filtrant (98) pour séparer la poudre séchée du gaz de séchage et diriger le gaz séparé vers une sortie de gaz (105) du plénum de séparation de poudre tout en dirigeant la poudre séchée séparée vers un récipient de collecte de poudre (25) ;
ledit plénum de direction de poudre (18) comprenant un échangeur de chaleur de chemise d'eau externe (65) disposé autour dudit plénum de direction de poudre (18) pour refroidir le gaz de séchage et la poudre entraînée pendant le passage à travers ledit plénum de direction de poudre lors de l'évacuation de ladite chambre de séchage (12) afin de réduire l'exposition de la poudre à des températures dommageables ; ledit échangeur de chaleur de chemise d'eau de plénum de direction de poudre (65) comprenant une entrée d'eau de refroidissement (68) adjacente à une extrémité couplée à une alimentation en eau de refroidissement (117) et une sortie d'eau de refroidissement (81) adjacente à une extrémité opposée de l'échangeur de chaleur de chemise d'eau de plénum de direction de poudre de sorte que l'eau de refroidissement provenant de ladite alimentation en eau de refroidissement (117) s'écoule en continu à travers l'échangeur de chaleur de chemise d'eau de plénum de direction de poudre (65) ;
un échangeur de chaleur de chemise d'eau de conduit de raccordement (70) définissant un passage annulaire d'eau de refroidissement (71) autour dudit conduit de raccordement (21) ; une entrée d'eau de refroidissement (78) adjacente à une extrémité du passage annulaire d'eau de refroidissement (71) de l'échangeur de chaleur de chemise d'eau de conduit de raccordement et une sortie d'eau de refroidissement adjacente à une extrémité opposée dudit passage annulaire d'eau de refroidissement (71) de l'échangeur de chaleur de chemise d'eau de conduit de raccordement, de sorte que l'eau de refroidissement fournie à ladite entrée d'eau de refroidissement (78) de l'échangeur de chaleur de chemise d'eau de conduit de raccordement est dirigée en continu à travers ledit passage annulaire d'eau de refroidissement (71) dudit échangeur de chaleur de chemise d'eau de conduit de raccordement (70) pour un refroidissement supplémentaire du gaz de séchage et de la poudre sortant du plénum de direction de poudre (18) avant d'entrer dans le plénum de séparation de poudre (24) et de se diriger vers le récipient de collecte de poudre.

2. Système de séchage par pulvérisation électrostatique selon la revendication 1, ledit plénum de direction de poudre (18) et l'échangeur de chaleur de chemise d'eau environnante (65) étant effilé de manière conique vers l'intérieur dans une direction aval.

3. Système de séchage par pulvérisation électrostatique selon la revendication 2, ledit échangeur de chaleur de chemise d'eau de plénum de direction de poudre (65) comprenant des parois coniques intérieure et extérieure (65a, 65b) qui définissent un passage conique d'écoulement de refroidissement (66).

4. Système de séchage par pulvérisation électrostatique selon la revendication 2, ladite entrée d'eau de refroidissement (68) de l'échangeur de chaleur de plénum de direction de poudre étant adjacente à une extrémité supérieure dudit échangeur de chaleur de plénum de direction de poudre (65) et ladite sortie d'eau de refroidissement (81) de l'échangeur de chaleur de plénum de direction de poudre étant adjacente à une extrémité inférieure dudit échangeur de chaleur de plénum de direction de poudre (65).

5. Système de séchage par pulvérisation électrostatique selon la revendication 1, ladite alimentation en eau de refroidissement (117) vers ledit échangeur de chaleur de plénum de direction de poudre (65) étant refroidie à une température comprise entre 4,5 °C et 12,8 °C.

6. Système de séchage par pulvérisation électrostatique selon la revendication 1, ladite sortie d'eau de refroidissement (81) dudit échangeur de chaleur de chemise d'eau de plénum de direction de poudre (65) étant couplée à l'entrée d'eau de refroidissement (78) dudit échangeur de chaleur de chemise d'eau de conduit de raccordement (70) pour diriger l'eau de refroidissement sortant dudit échangeur de chaleur de chemise d'eau de plénum de direction de poudre (65) à travers ledit échangeur de chaleur de chemise d'eau de conduit de raccordement (70).

7. Système de séchage par pulvérisation électrostatique selon la revendication 1, ledit conduit de raccordement (21) communiquant entre une extrémité inférieure dudit plénum de direction de poudre et une extrémité supérieure dudit plénum de séparation de poudre.

8. Système de séchage par pulvérisation électrostatique selon la revendication 1, ladite alimentation en eau de refroidissement (117) vers ledit échangeur de chaleur de plénum de direction de poudre (65) étant efficace pour refroidir le gaz chauffé et la poudre évacués de ladite chambre de séchage (12) à des températures comprises entre 60 °C et 90 °C et pour refroidir le gaz de séchage et la poudre séchée à des températures comprises entre 25 °C et 50 °C avant la direction vers ledit plénum de séparation de poudre (24).

9. Système de séchage par pulvérisation électrostatique selon la revendication 1, comprenant une conduite de retour de gaz (26) couplée entre ladite sortie de gaz de plénum de séparation de poudre (105) et ladite entrée de gaz de chambre de séchage (15) pour rediriger le gaz de séchage dans ladite chambre de chauffage (12), et un dispositif de chauffage (118) disposé dans ladite conduite de retour de gaz (26) pour réchauffer le gaz avant de rediriger le gaz dans la chambre de chauffage (12).

10. Système de séchage par pulvérisation électrostatique selon la revendication 9, ladite conduite de retour de gaz (26) comprenant un condenseur (115) en amont dudit dispositif de chauffage (118) pour éliminer la vapeur liquide dudit gaz avant la direction vers ledit dispositif de chauffage.

11. Système de séchage par pulvérisation électrostatique selon la revendication 10, ledit condenseur (115) ayant une conduite de sortie d'eau (119) pour diriger l'eau condensée vers l'entrée d'eau de refroidissement (68) dudit échangeur de chaleur de chemise d'eau de plénum de direction de poudre (65).

12. Système de séchage par pulvérisation électrostatique selon la revendication 11, comprenant une vanne pouvant être actionnée sélectivement (120) dans ladite conduite de sortie d'eau de condenseur (119) pour diriger sélectivement l'eau condensée vers ladite alimentation en eau de refroidissement (122) ou ladite entrée d'eau de refroidissement (68) dudit échangeur de chaleur de chemise d'eau de plénum de direction de poudre (65).

13. Système de séchage par pulvérisation électrostatique selon la revendication 12, comprenant un capteur de température (125) dans ledit plénum de séparation de poudre pour détecter la température dans ledit plénum de séparation de poudre, et une commande pour actionner ladite vanne (120) en réponse aux températures détectées par ledit capteur de température (125).
